# EUROPEAN PATENT APPLICATION

(11) **EP 4 604 267 A1**
(43) Date of publication of application: **20.08.2025**
(21) Application number: 23893569.6
(22) Date of filing: 31.10.2023
(51) Int. Cl.: H01M 10/613, H01M 10/615, H01M 10/6556

(54) **HEAT EXCHANGE ASSEMBLY, BATTERY, AND ELECTRIC DEVICE**

(30) Priority: 21.11.2022 CN 202223090680 U
(71) Applicant: Contemporary Amperex Technology (Hong Kong) Limited, Hong Kong (HK)
(72) Inventor: LI, Jiaqi, Ningde, Fujian 352100 (CN); HUANG, Yincheng, Ningde, Fujian 352100 (CN); YOU, Kaijie, Ningde, Fujian 352100 (CN); LIU, Chen, Ningde, Fujian 352100 (CN); SHEN, Zhen, Ningde, Fujian 352100 (CN)
(74) Representative: Gong, Jinping
(86) International application number: PCT/CN2023/128221
(87) International publication number: WO 2024/109478

(57) **Abstract**

The present application discloses a heat exchange assembly, a battery and an electrical device. The heat exchange assembly includes a current collecting piece and a plurality of heat exchange pieces. The heat exchange piece is constructed with a first flow channel and a first joint portion communicating with the first flow channel. The current collecting piece is constructed with a second flow channel and a plurality of second joint portions. The plurality of second joint portions each communicate with the second flow channel and are configured to be connected to the first joint portions of the plurality of heat exchange pieces respectively, such that the second flow channel of the current collecting piece communicates with the first flow channels of the plurality of heat exchange pieces. When the heat exchange assembly and battery units form a group, the assembly procedure is simple, and the assembly and fabrication efficiency is high.

## Description

The present application claims priority to Chinese Patent Application No. 202223090680.X, filed with the China National Intellectual Property Administration on November 21, 2022 and entitled "HEAT EXCHANGE ASSEMBLY, BATTERY AND ELECTRICAL DEVICE", which is incorporated herein by reference in its entirety.

### TECHNICAL FIELD

The present application belongs to the technical field of battery heat exchange, and particularly relates to a heat exchange assembly, a battery and an electrical device.

### BACKGROUND

A heat exchange assembly, as a core component of a battery thermal management system, usually exchanges heat with a battery unit, so as to play a role in heating and cooling the battery unit to ensure that the battery unit works within an appropriate temperature range and to ensure stable running of a battery.

However, in an actual manufacturing process, the fabrication operation between the battery unit and the heat exchange assembly is complicated, and the assembly efficiency is relatively low.

The description in the background section merely provides background information related to the present application, but does not necessarily constitute prior art or related art.

### SUMMARY

An objective of embodiments of the present application is to provide a heat exchange assembly, a battery and an electrical device to solve problems including but not limited to complicated fabrication operation of a battery unit and a heat exchange assembly and relatively low assembly efficiency.

A technical solution disclosed in an embodiment of the present application is as follows:
According to a first aspect, a heat exchange assembly is provided. The heat exchange assembly includes a current collecting piece and a plurality of heat exchange pieces. The heat exchange piece is constructed with a first flow channel and a first joint portion communicating with the first flow channel. The current collecting piece is constructed with a second flow channel and a plurality of second joint portions. The plurality of second joint portions each communicate with the second flow channel and are configured to be connected to the first joint portions of the plurality of heat exchange pieces respectively, such that the second flow channel of the current collecting piece communicates with the first flow channels of the plurality of heat exchange pieces.

According to the heat exchange assembly in this embodiment of the present application, when the heat exchange assembly is assembled with battery units, the plurality of battery units are combined with the plurality of heat exchange pieces first, and then the plurality of second joint portions on the current collecting piece are connected to the first joint portions on the heat exchange pieces in one-to-one correspondence, thereby completing assembly of the battery units and the heat exchange assembly. The heat exchange assembly may simultaneously connect the plurality of heat exchange pieces to the current collecting piece through the second joints by arranging the plurality of second joint portions on one current collecting piece, which, compared with a form of separate connection of a plurality of current collecting pieces, can save parts and reduce assembly procedures, thereby improving the assembly and fabrication efficiency.

In an embodiment, the current collecting piece includes a connecting face oriented toward the heat exchange pieces, and the plurality of second joint portions are disposed on the connecting face.

When the heat exchange assembly according to this embodiment of the present application is assembled, the connecting face of the current collecting piece is placed toward the heat exchange pieces, and the second joint portions are disposed opposite to the heat exchange pieces, thereby facilitating the connection of the first joint portions and the second joint portions, and also contributing to the improvement of the assembly efficiency.

In an embodiment, the plurality of heat exchange pieces are spaced apart along a first direction, and the plurality of second joint portions are spaced out on the connecting face along the first direction, such that the plurality of second joint portions are in one-to-one correspondence with the first joint portions of the plurality of heat exchange pieces.

When the heat exchange assembly according to this embodiment of the present application is assembled with the battery units, the plurality of second joint portions on the current collecting piece are adjusted to be distributed along the first direction and opposite to the first joint portions, such that the first joint portions may be aligned with the second joint portions, which makes the connecting operation of a heat exchange plate and the current collecting piece simpler and quicker, and also contributes to the improvement of the assembly efficiency.

In an embodiment, the heat exchange assembly further includes connectors, and each connector is disposed at a junction of the first joint portion and the second joint portion to connect the first joint portion to the second joint portion.

According to the heat exchange assembly in this embodiment of the present application, the first joint portion and the second joint portion are connected through the connector, such that the connecting operation of the first joint portion and the second joint portion is simple and quick, which contributes to the improvement of the assembly efficiency of the heat exchange assembly and the battery units.

In an embodiment, the first joint portion includes a first through hole, the second joint portion includes a second through hole, the connector includes a first end and a second end that extend along a connecting direction of the first joint portion and the second joint portion, the first end is connected into the first through hole, the second end is connected into the second through hole, and the connector includes a connecting hole running through the first end and the second end.

According to the heat exchange assembly in this embodiment of the present application, after the first end and the second end of the connector are connected into the first through hole and the second through hole respectively, the connection, fixing and communication of the current collecting piece and the heat exchange plate may be simultaneously realized, thereby simplifying assembly operation, which contributes to the improvement of the assembly efficiency of the heat exchange assembly and the battery units.

In an embodiment, the first end is inserted in the first through hole, and the second end is inserted in the second through hole.

According to the heat exchange assembly in this embodiment of the present application, the first end is inserted in the first through hole, and the second end is inserted in the second through hole, such that the connector is connected to the current collecting piece and the heat exchange piece respectively. The connecting operation is simple, which contributes to the improvement of the assembly efficiency of the heat exchange assembly and the battery units.

In an embodiment, the heat exchange assembly further includes first seals, and the first seal is disposed between the connector and a hole wall of the first through hole; and/or, the first seal is disposed between the connector and a hole wall of the second through hole.

According to the heat exchange assembly in this embodiment of the present application, the first seals reduce the risk of leakage of a heat exchange medium, which contributes to the improvement of the heat exchange efficiency.

In an embodiment, heat exchange piece includes a first side plate and a second side plate, and the first side plate and the second side plate are connected and close in to form the first flow channel and the first through hole.

The heat exchange piece according to this embodiment of the present application is formed by the connecting and closing in of the first side plate and the second side plate, and is simple in structure and also convenient to machine and manufacture. In addition, in a specific manufacturing process, the first side plate and the second side plate may be manufactured by stamping, such that the machining and manufacturing of the heat exchange piece are simpler, and the manufacturing cost is lower.

In an embodiment, the connector includes a first connecting portion and a second connecting portion, the first connecting portion is connected to the first side plate, the second connecting portion is connected to the second side plate, and the first connecting portion and the second connecting portion close in to form the connecting hole.

According to the heat exchange assembly in this embodiment of the present application, the connector uses a separate structure of the first connecting portion and the second connecting portion, and the first connecting portion and the second connecting portion may be manufactured by stamping, or the like, such that the machining and manufacturing of the connector are simpler.

In an embodiment, the first side plate and the first connecting portion are of a one-piece structure; or the first connecting portion is bonded to the first side plate; or the first connecting portion is welded to the first side plate.

The heat exchange pieces in the heat exchange assembly according to this embodiment of the present application are easier to manufacture and machine, and the machining and manufacturing cost is low.

In an embodiment, the second side plate and the second connecting portion are of a one-piece structure; or the second connecting portion is bonded to the second side plate; or the second connecting portion is welded to the second side plate.

The heat exchange pieces in the heat exchange assembly according to this embodiment of the present application are easier to manufacture and machine, and the machining and manufacturing cost is low.

In an embodiment, the second end is threaded in the second through hole, and the first end is screwed in the first through hole, such that the heat exchange piece is connected to the current collecting piece.

According to the heat exchange assembly in this embodiment of the present application, the second end of the connector is threaded in the second through hole, and the first end of the connector is screwed in the first through hole. By threaded connection, on the one hand, the connecting operation is simple, which contributes to the improvement of the assembly effect; and in addition, the manner of threaded connection has good connection reliability and also ensures stable connection between the connector and the heat exchange piece. Moreover, threaded connection has a sealing effect, which can also reduce the leakage of a heat exchange medium and improve the heat exchange effect.

In an embodiment, the current collecting piece includes a first plate body and a second plate body, and the first plate body and the second plate body are connected and close in to form the second flow channel; and the second through holes are disposed on the first plate body.

According to the heat exchange assembly in this embodiment of the present application, when the first joint portion is connected to the second joint portion, the first end of the connector passes through the second through hole first, and then is threadedly locked in the first through hole to fix the first plate body on the heat exchange piece, and finally the second plate body is fixed on the first plate body, thereby realizing assembly of the heat exchange pieces and the current collecting piece. The assembly operation is simple, convenient and quick, which contributes to the improvement of the heat exchange assembly and the battery units.

In an embodiment, a second seal is sandwiched between the first plate body and the second plate body, and the second seal surrounds the second flow channel; and/or, one of the first plate body and the second plate body is provided with an annular seal bulge, and the other of the first plate body and the second plate body is provided with an annular seal groove; and the annular seal bulge is inserted in the annular seal groove and surrounds the second flow channel.

The heat exchange assembly according to this embodiment of the present application can seal the second flow channel, reduce the risk of leakage of the heat exchange medium, and improve the heat exchange efficiency.

In an embodiment, the second joint portion further includes a first bulge, the first bulge protrudes from the connecting face, and the second through hole runs through the first bulge along the connecting direction of the first joint portion and the second joint portion.

According to the heat exchange assembly in this embodiment of the present application, the disposing of the first bulge can increase the thickness of the second through hole, improve the structural strength of the second through hole, and improve the connection reliability of the current collecting piece and the connector. In addition, the disposing of second bulge can also increase the depth of the second through hole, thereby increasing the connection area of the connector and the second through hole, improving the connection reliability of the current collecting piece and the connector, and in turn, improving the structural strength of the entire heat exchange assembly.

In an embodiment, the first joint portion further includes a second bulge, the second bulge is disposed on an outer surface of the heat exchange piece oriented toward the current collecting piece, the first through hole runs through the second bulge along the connecting direction of the first joint portion and the second joint portion, and the first bulge abuts against the second bulge.

According to the heat exchange assembly in this embodiment of the present application, the disposing of the second bulge can increase the thickness of the first through hole, improve the structural strength of the first through hole, improve the connection reliability of the heat exchange piece and the connector, and in turn, improve the structural strength of the entire heat exchange assembly.

In an embodiment, a third seal is sandwiched between the first bulge and the second bulge, and the connector is threaded in the third seal.

The heat exchange assembly according to this embodiment of the present application reduces the risk of leakage of the heat exchange medium in the second flow channel, reduces the leakage of the heat exchange medium in the heat exchange assembly, and contributes to the improvement of the heat exchange efficiency.

In an embodiment, the second joint portion further includes a third bulge, the third bulge is disposed on an inner wall of the second flow channel close to the heat exchange piece, and the second through hole runs through the third bulge along the connecting direction of the first joint portion and the second joint portion.

According to the heat exchange assembly in this embodiment of the present application, the disposing of the third bulge can increase the thickness of the second through hole, improve the structural strength of the second through hole, and improve the connection reliability of the current collecting piece and the connector. In addition, the disposing of the third bulge can also increase the depth of the second through hole, thereby increasing the connection area of the connector and the second through hole, improving the connection reliability of the current collecting piece and the connector, and in turn, improving the structural strength of the entire heat exchange assembly.

According to a second aspect, a battery is provided. The battery includes the foregoing heat exchange assembly.

The battery according to an embodiment of the present application uses the foregoing heat exchange assembly. The assembly operation of the heat exchange assembly and the battery units is simple, and the assembly efficiency is high, which contributes to the improvement of the production efficiency of the battery and the reduction of the manufacturing cost of the battery.

According to a third aspect, an electrical device is provided. The electrical device includes the foregoing battery.

The electrical device according to an embodiment of the present application uses the foregoing battery. The manufacturing cost of the battery is low, which contributes to the reduction of the manufacturing cost of the electrical device.

### BRIEF DESCRIPTION OF DRAWINGS

To describe the technical solutions in some embodiments of the present application more clearly, the following outlines the drawings to be used in the description of some exemplary embodiments of the present application. Evidently, the drawings outlined below are merely some embodiments of the present application. A person of ordinary skill in the art may derive other drawings from such drawings without making any creative efforts.
FIG. 1 is a schematic structural diagram of a vehicle provided by an embodiment of the present application.
FIG. 2 is a schematic structural exploded view of a battery according to an embodiment of the present application.
FIG. 3 is a schematic structural exploded view of a battery cell according to an embodiment of the present application.
FIG. 4 is a schematic structural diagram of a heat exchange assembly and battery units provided by an embodiment of the present application after being assembled.
FIG. 5 is a schematic structural exploded view of the heat exchange assembly shown in FIG. 1.
FIG. 6 is a schematic structural diagram of the heat exchange assembly provided by an embodiment of the present application as observed from a viewing angle.
FIG. 7 is a schematic structural exploded view of the heat exchange assembly shown in FIG. 6.
FIG. 8 is a schematic structural diagram of the heat exchange assembly shown in FIG. 6 as observed from another viewing angle.
FIG. 9 is a sectional view along an A-A line in FIG. 8.
FIG. 10 is a close-up view of a part B in FIG. 9.
FIG. 11 is a schematic structural partially exploded view of the heat exchange assembly provided by an embodiment of the present application.
FIG. 12 is a close-up view of a part C in FIG. 11.
FIG. 13 is a schematic structural partially exploded view of the heat exchange assembly provided by an embodiment of the present application.
FIG. 14 is a schematic structural diagram of a current collecting piece provided by an embodiment of the present application.
FIG. 15 is a schematic structural diagram of the heat exchange assembly provided by an embodiment of the present application.
FIG. 16 is a sectional view along a D-D line in FIG. 15.
FIG. 17 is a close-up view of a part E in FIG. 16.
FIG. 18 is a schematic structural exploded view of the heat exchange assembly shown in FIG. 15 as observed from a viewing angle.
FIG. 19 is a schematic structural exploded view of the heat exchange assembly shown in FIG. 15 as observed from another viewing angle.
FIG. 20 is a schematic structural partially exploded view of the heat exchange assembly shown in FIG. 15 as observed from a viewing angle.
FIG. 21 is a schematic structural partially exploded view of the heat exchange assembly shown in FIG. 15 as observed from another viewing angle.

### List of reference numerals:

1000. vehicle; 1100. battery; 1200. controller; 1300. motor; 10. box; 11. first portion; 12. second portion; 20. battery cell; 21. end cap; 22. shell; 23. electrode assembly;
1. heat exchange assembly; 100. current collecting piece; 110. first plate body; 111. annular seal bulge; 112. annular abutting bulge; 120. second plate body; 121. annular seal groove; 122. annular accommodation groove; 101. second flow channel; 102. second joint portion; 1021. second through hole; 1022. first bulge; 1023. third bulge; 103. connecting face; 200. heat exchange piece; 210. first side plate; 211. connecting bulge; 212. first semi-ring bulge; 220. second side plate; 221. second semi-ring bulge; 201. first flow channel; 202. first joint portion; 2021. first through hole; 2022. second bulge; 203. accommodation clearance; 204. seal accommodation groove; 300. connector; 310. first connecting portion; 320. second connecting portion; 301. connecting hole; 410. first seal; 420. second seal; 430. third seal; 440. second screw; 500. battery unit; 610. liquid inlet joint; and 620. liquid outlet joint.

### DETAILED DESCRIPTION OF EMBODIMENTS

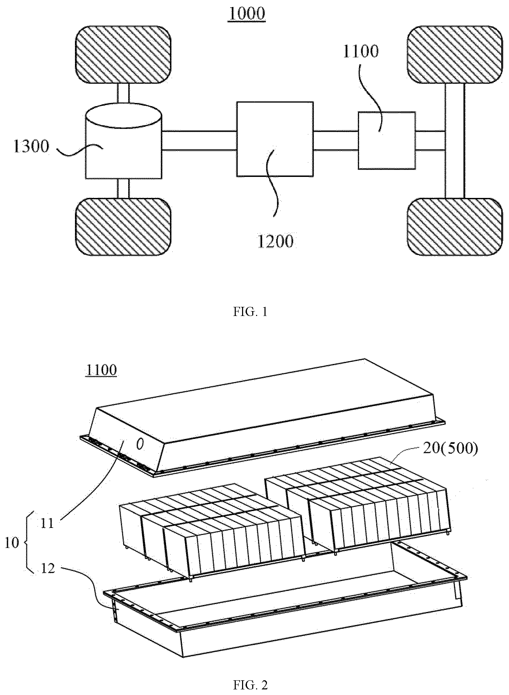

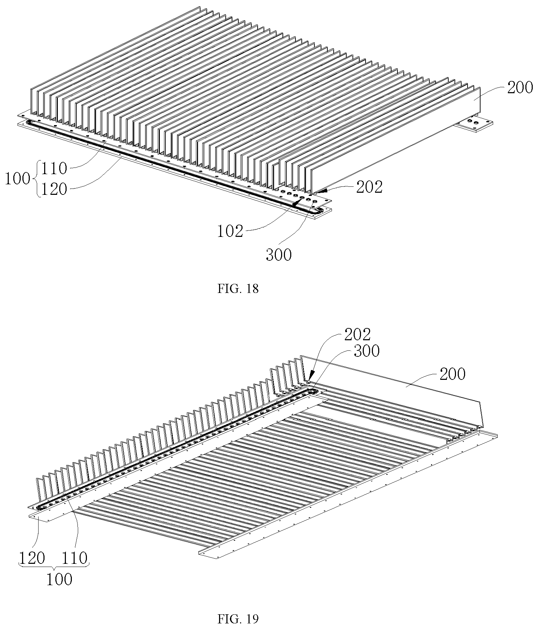

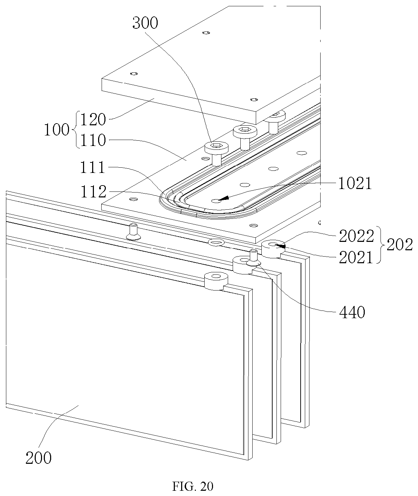

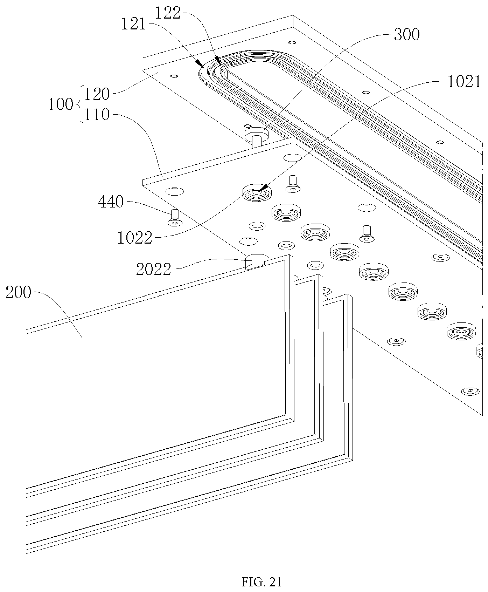

The following describes embodiments of the present application in detail. Examples of the embodiments are shown in FIGS. 1 to 21, throughout which the same or similar reference numerals represent the same or similar components or components of the same or similar functions. The embodiments described below with reference to FIGS. 1 to 21 are exemplary, and are intended to construe the present application but not to limit the present application.

Understandably, in the description of the present application, a direction or positional relationship indicated by the terms such as "length", "width", "up", "down", "front", "back", "left", "right", "vertical", "horizontal", "top", "bottom", "in", and "out" is a direction or positional relationship based on the illustration in the drawings, and is merely intended for ease or brevity of description of the present application, but does not necessarily mean or imply that the indicated device or component is located in the specified direction or constructed or operated in the specified direction. Therefore, such terms are not to be understood as a limitation on the present application.

In addition, the terms "first" and "second" are used merely for descriptive purposes but are not to be construed as indicating or implying relative importance or implicitly specifying the quantity of technical features indicated. Therefore, a feature defined with first" or "second" may explicitly or implicitly include one or more of the features. In the description of the present application, unless otherwise expressly and specifically defined, "a plurality of" means two or more.

In the present application, unless otherwise expressly specified or defined, the terms such as "mount", "concatenate", "connect" and "fix" shall be understood broadly, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art may understand specific meaning of the above terms in the present application based on specific circumstances.

It is hereby noted that, in the description of the present application, the term "and/or" merely indicates a relationship between related items, and represents three possible relationships. For example, "A and/or B" may represent the following three circumstances: A alone, both A and B, and B alone.

Further, it is hereby noted that in embodiments of the present application, the same component or the same part is denoted by the same reference numeral in the accompanying drawings. For identical components or parts in embodiments of the present application, the drawings may illustrate the reference numeral of only one of the components or parts as an example. Understandably, the reference numeral is equally applicable to other identical components or parts.

In the present application, the terms such as "an embodiment", "some embodiments", "examples", "specific examples" or "some examples" mean that the specific feature, structure, material or characteristic described in combination with the embodiment or example is included in at least one embodiment or example of the present application. In the specification, the exemplary expressions of the above terms do not necessarily refer to the same embodiment or example. Moreover, the described specific feature, structure, material or characteristic may be combined in an appropriate manner in any one or more embodiments or examples. In addition, a person skilled in the art may integrate or combine different embodiments or examples as well as the features of different embodiments or examples described herein to the extent that they do not contradict each other.

Currently, the market development trend shows that, power batteries are applied more extensively. The power batteries are not only applied to energy storage power systems such as hydro, thermal, wind, and solar power stations, but also widely applied to electric means of transport such as electric bicycles, electric motorcycles, and electric vehicles, as well as in various fields such as military equipment and aerospace.

A battery cannot work normally when the temperature is too high or too low, and may even cause a safety accident. Therefore, it is necessary to perform temperature control on the battery. In some circumstances, the battery is internally provided with a heat exchange assembly through which a battery unit is heated and cooled, thereby realizing temperature control over the battery. The heat exchange assembly usually includes a plurality of heat exchange pieces and a plurality of current collecting pieces. In the process of assembling the battery unit with the heat exchange assembly, one heat exchange piece and one battery unit are stacked and assembled first, and then two current collecting pieces are mounted at two ends of a heat exchange plate respectively to obtain a heat exchange module. Then, a plurality of heat exchange modules are assembled together one by one. Moreover, in the assembly process, when two adjacent heat exchange modules are assembled, it is also necessary to connect current collecting pieces on the two adjacent heat exchange modules together with the aid of auxiliary parts, thereby realizing communication of the heat exchange modules. The inventor hereof has noticed that, the plurality of current collecting pieces in the heat exchange assembly are in a structural form of separate connection along an arrangement direction of the heat exchange pieces, which requires the heat exchange modules to be assembled one by one and with the aid of the auxiliary parts, such that the assembly operation is cumbersome, and the assembly efficiency is low.

In order to alleviate the problem, the inventor has designed a heat exchange assembly after in-depth research. When the heat exchange assembly is assembled with battery units, the plurality of battery units are combined with a plurality of heat exchange pieces first, and then a plurality of second joint portions on a current collecting piece are connected to first joint portions on the heat exchange pieces in one-to-one correspondence, thereby completing assembly of the battery units and the heat exchange assembly. The heat exchange assembly may simultaneously connect the plurality of heat exchange pieces to the current collecting piece through the second joints by arranging the plurality of second joint portions on one current collecting piece, which, compared with the form of separate connection of the plurality of current collecting pieces, can save parts and reduce assembly procedures, thereby improving the assembly and fabrication efficiency.

An embodiment of the present application further provides an electrical device using a battery as a power supply. The electrical device may be, but is not limited to, a mobile phone, a tablet, a laptop computer, an electric toy, an electric tool, an electric power cart, an electric vehicle, a ship, a spacecraft, or the like. The electric toy may include stationary or mobile electric toys, such as a game console, an electric car toy, an electric ship toy, and an electric airplane toy. The spacecraft may include an airplane, a rocket, a space shuttle, a spaceship, and the like.

For ease of description in the following embodiments, a vehicle 1000 is used as an example of an electrical device according to an embodiment of the present application.

Referring to FIG. 1, FIG. 1 is a schematic structural diagram of a vehicle 1000 provided by some embodiments of the present application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 1100 is disposed inside the vehicle 1000. The battery 1100 may be disposed at the bottom, front, or rear of the vehicle 1000. The battery 1100 may be configured to supply power to the vehicle 1000. For example, the battery 1100 may serve as an operating power supply of the vehicle 1000. The vehicle 1000 may further include a controller 1200 and a motor 1300. The controller 1200 is configured to control the battery 1100 to supply power to the motor 1300, for example, to meet the working power requirements of the vehicle 1000 in start, navigation and running.

In some embodiments of the present application, the battery 1100 serves not only as an operating power supply of the vehicle 1000, but may also serve as a driving power supply of the vehicle 1000 to provide driving power for the vehicle 1000 in place of or partly in place of fuel oil or natural gas.

Referring to FIG. 2, in an embodiment of the battery 1100, the battery 1100 includes a box 10 and a battery unit 500. The battery unit 500 is accommodated in the battery box 10. The battery box 10 is configured to provide an accommodation space for the battery unit 500, and the battery box 10 may assume various structures. In some embodiments, the battery box 10 may include a first portion 11 and a second portion 12. The first portion 11 and the second portion 12 fit and cover each other. The first portion 11 and the second portion 12 jointly define the accommodation space for accommodating the battery unit 500. The second portion 12 may be of a hollow structure opened at one end. The first portion 11 may be of a plate-like structure. The first portion 11 fits and covers an opening side of the second portion 12, such that the first portion 11 and the second portion 12 jointly define the accommodation space. The first portion 11 and the second portion 12 may be each of a hollow structure opened at one end. An opening side of the first portion 11 fits and covers the opening side of the second portion 12. Certainly, the battery box 10 formed by the first portion 11 and the second portion 12 may have various shapes, such as a cylinder and a cuboid.

In the battery 1100, there may be a plurality of battery units 500. The plurality of battery units 500 may be connected in series or in parallel or in parallel and series. Connected in parallel and series means that there are both series and parallel connections in the plurality of battery units 500. The battery unit 500 may be a battery cell 20 or a battery module, where the battery module refers to a modular component that is formed by assembling a plurality of battery cells 20.

In an embodiment, the plurality of battery cells 20 may be directly connected together in series or in parallel or in parallel and series, and then the entirety of the plurality of battery cells 20 is accommodated in the box 10. Certainly, the plurality of battery cells 20 may be connected in series or in parallel or in parallel and series to form a battery module first, and then a plurality of battery modules are connected in series or in parallel or in parallel and series to form an entire battery 1100 and accommodated in the box 10. The battery 1100 may further include other structures. For example, the battery 1100 may further include a busbar component for realizing an electrical connection between the plurality of battery cells 20.

Each battery cell 20 may be a secondary battery or a primary battery, and may also be a lithium-sulfur battery, a sodium-ion battery, or a magnesium-ion battery, but is not limited thereto. The battery cells 20 may be cylindrical, flat, rectangular, or other shapes, etc.

In another embodiment of the battery 1100, the battery 1100 does not include the box 10, but a plurality of battery cells 20 are electrically connected to form a whole by means of a necessary fixing structure, and then fitted into an electrical device.

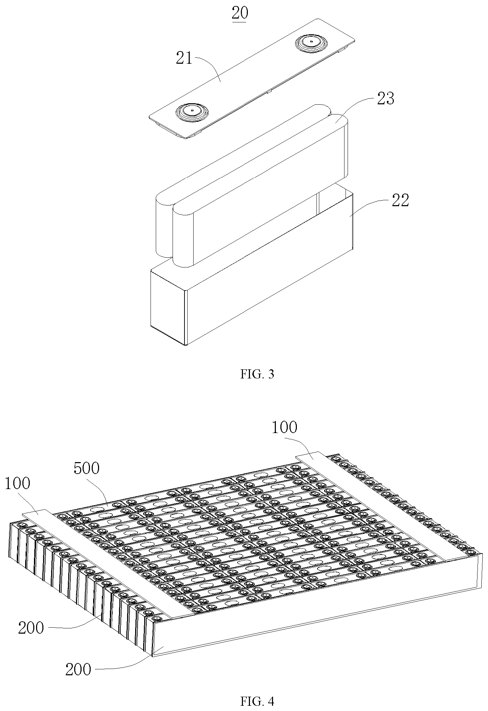

Referring to FIG. 3, FIG. 3 is a schematic structural exploded view of a battery cell 20 provided by some embodiments of the present application. The battery cell 20 is the smallest unit that makes up a battery. As shown in FIG. 3, the battery cell 20 includes an end cap 21, a shell 22, an electrode assembly 23, and other functional components.

The end cap 21 is a component that fits and covers an opening of the shell 22 to isolate an internal environment of the battery cell 20 from an external environment. Without limitation, the shape of the end cap 21 may be adapted to the shape of the shell 22 to fit the shell 22. In an embodiment, the end cap 21 may be made of a material having a certain degree of hardness and strength (e.g., aluminum alloy). In this way, the end cap 21 is less likely to deform when subjected to extrusion and collision, allowing the battery cell 20 to have higher structural strength and improved safety performance. The end cap 21 may be provided with functional components such as electrode terminals. The electrode terminals may be configured to be electrically connected to the electrode assembly 23 to output or input electrical energy of the battery cell 20. In some embodiments, the end cap 21 may further be provided with a pressure relief mechanism configured to release an internal pressure when the internal pressure or temperature of the battery cell 20 reaches a threshold value. The end cap 21 may also be made of a variety of materials such as copper, iron, aluminum, stainless steel, aluminum alloy, and plastic, which are not particularly limited in these embodiments of the present application. In some embodiments, an insulator may further be disposed on an inner side of the end cap 21, and the insulator may be configured to isolate an electrically connected component in the shell 22 from the end cap 21 to reduce the risk of a short circuit. Exemplarily, the insulator may be plastic, rubber, or the like.

The shell 22 is an assembly configured to fit the end cap 21 to form the internal environment of the battery cell 20. The formed internal environment may be configured to accommodate the electrode assembly 23, an electrolyte solution, and other components. The shell 22 and the end cap 21 may be stand-alone components. The opening may be disposed on the shell 22. At the opening, the end cap 21 fits and covers the opening to form the internal environment of the battery cell 20. Without limitation, the top cap 21 and the shell 22 may be integrated. The end cap 21 and the shell 22 may form a common connecting face before other components are put into the shell. Subsequently, when an interior of the shell 22 needs to be sealed, the end cap 21 is made to fit and cover the shell 22. The shell 22 may have various shapes and sizes, such as a cuboid, a cylinder, or a hexagonal prism. The shape of the shell 22 may be determined depending on the specific shape and size of the electrode assembly 23. The shell 22 may be made of a variety of materials, such as copper, iron, aluminum, stainless steel, aluminum alloy, or plastic, which are not particularly limited in these embodiments of the present application.

The electrode assembly 23 is a component that reacts electrochemically in the battery cell 20. The shell 22 may contain one or more electrode assemblies 23. The electrode assembly 23 is primarily formed by winding or stacking a positive electrode plate and a negative electrode plate, and a separator is usually disposed between the positive electrode plate and the negative electrode plate. Parts of the positive electrode plate and the negative electrode plate having active materials constitute a body portion of the electrode assembly 23, while parts of the positive electrode plate and the negative electrode plate having no active material constitute tabs respectively. The positive tab and the negative tab may be located at one end of the body portion together or at two ends of the body portion respectively. In a charge-and-discharge process of the battery, the positive active material and the negative active material react with the electrolyte solution, and the tabs are connected to the electrode terminals to form a current circuit.

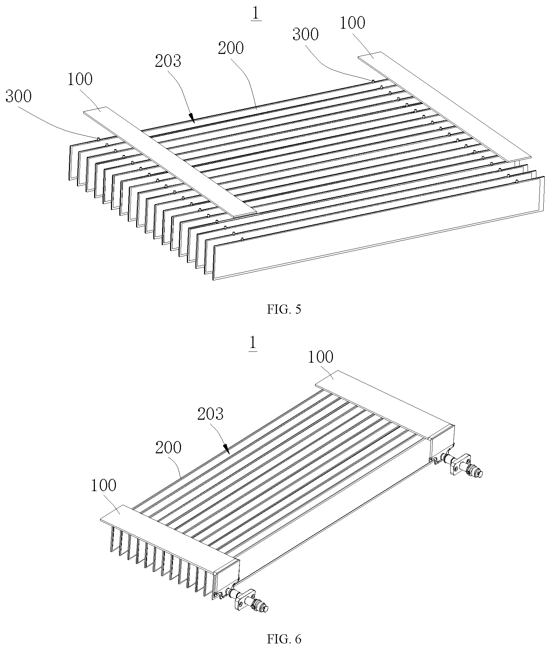

With reference to FIG. 4 and FIG. 5, a plurality of heat exchange pieces 200 and a plurality of groups of battery units 500 are alternately spaced out. Each group of battery units 500 is located between two adjacent heat exchange pieces 200. The two adjacent heat exchange pieces 200 exchange heat with two opposite sides of each group of battery units 500, such that double-sided heat exchange of the battery units 500 is realized. By increasing the heat exchange area, the battery is quickly heated and cooled. The two adjacent heat exchange pieces 200 are directly in contact with two opposite side faces of the battery units 500, or bonded thereto through a heat-conducting adhesive, such that the battery units 500 exchange heat with the heat exchange pieces 200, and double-sided water cooling of the battery is realized, thereby solving the problem of an excessively high temperature rise in the battery and the problem of an excessively low temperature in the battery. After the battery units 500 and heat exchange assembly 1 in a group are put into the box, a part of the heat exchange pieces 200 in the heat exchange assembly 1 may further serve as cross beams of the box 10 to improve the structural strength of the battery. Each group of battery units 500 may include one or more battery units 500, and the specific number thereof may be selected according to actual needs, and is not limited herein.

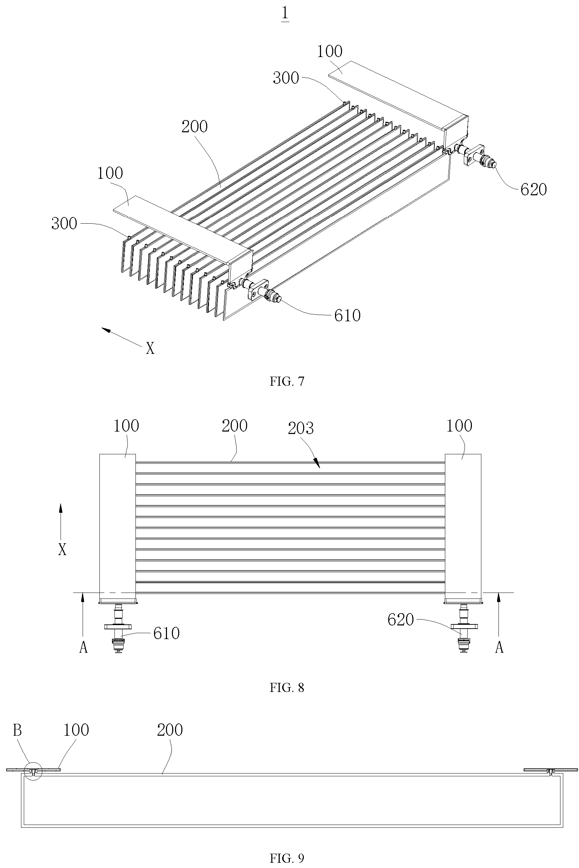

With reference to FIG. 7, in an embodiment of the present application, a heat exchange assembly 1 is provided. The heat exchange assembly 1 includes a current collecting piece 100 and a plurality of heat exchange pieces 200. With reference to FIG. 8, FIG. 9 and FIG. 10 together, the heat exchange piece 200 is constructed with a first flow channel 201 and a first joint portion 202 communicating with the first flow channel 201. The current collecting piece 100 is constructed with a second flow channel 101 and a plurality of second joint portions 102. The plurality of second joint portions 102 each communicate with the second flow channel 101 and are configured to be connected to the first joint portions 202 of the plurality of heat exchange pieces 200 respectively, such that the second flow channel 101 of the current collecting piece 100 communicates with the first flow channels 201 of the plurality of heat exchange pieces 200.

The heat exchange piece 200 refers to a component that exchanges heat with the battery unit 500. The heat exchange piece 200 has good heat-conducting performance to exchange heat with the battery unit 500. The heat exchange piece 200 may be made of materials having good heat-conducting performance, such as aluminum and copper.

The first flow channel 201 refers to a channel that is disposed in the heat exchange piece 200 and available for flow of a heat exchange medium.

The first joint portion 202 refers to a portion on the heat exchange piece 200 for being connected to the current collecting piece 100.

The current collecting piece 100 refers to a component that introduces the collected heat exchange medium into the heat exchange pieces 200 or that is configured to collect the heat exchange medium flowing out from the heat exchange pieces 200. A material of the current collecting piece 100 is not limited to plastic, aluminum or other metal pieces.

The second flow channel 101 refers to a channel that is disposed in the current collecting piece 100 and available for flow of the heat exchange medium.

The second joint portion 102 refers to a portion that is disposed on the current collecting piece 100 for being connected to the heat exchange piece 200.

The plurality of second joint portions 102 are configured to be connected to the first joint portions 202 of the plurality of heat exchange pieces 200 respectively, such that the second flow channel 101 of the current collecting piece 100 communicates with the first flow channels 201 of the plurality of heat exchange pieces 200. Understandably, the second joint portions 102 are connected to the first joint portions 202 in one-to-one correspondence. On the one hand, the current collecting piece 100 can be connected and fixed to the heat exchange pieces 200; and on the other hand, after the first joint portions 202 and the second joint portions 102 are connected, the first flow channels 201 can further communicate with the second flow channel 101, such that the heat exchange medium input into the second flow channel 101 flows into the first flow channels 201, or the heat exchange medium in the first flow channels 201 flows into the second flow channel 101 to be collected and then output.

According to the heat exchange assembly 1 in this embodiment of the present application, when the heat exchange assembly 1 is assembled with the battery units 500, the plurality of battery units 500 are combined with the plurality of heat exchange pieces 200 first, and then the plurality of second joint portions 102 on the current collecting piece 100 are connected to the first joint portions 202 on the heat exchange pieces 200 in one-to-one correspondence, thereby completing assembly of the battery units 500 and the heat exchange assembly 1. The heat exchange assembly 1 may simultaneously connect the plurality of heat exchange pieces 200 to the current collecting piece 100 through the second joints by arranging the plurality of second joint portions 102 on one current collecting piece 100, which, compared with a form of separate connection of a plurality of current collecting pieces 100, can save parts and reduce assembly procedures, thereby improving the assembly and fabrication efficiency.

In this embodiment, in the assembly process, the plurality of battery units 500 and the plurality of heat exchange pieces 200 are combined into an entirety first, and then the plurality of second joint portions 102 on the current collecting piece 100 are connected to the first joint portions 202 on the heat exchange pieces 200 in one-to-one correspondence. The integral connection manner has simpler and more convenient assembly operation and higher assembly efficiency than the assembly manner of separate connection of the plurality of current collecting pieces 100.

A specific assembly method may be that every three heat exchange pieces 200 and two groups of battery units 500 form a unit module, a plurality of unit modules are arrayed and combined and then fabricated with the current collecting piece 100 and put into a box together to be fabricated into a battery. The battery units 500 are not limited to be prismatic or pouch-type. The direction of electrode terminals of the battery units 500 may be led out according to a grouping manner.

In another embodiment, with reference to FIG. 6, FIG. 7 and FIG. 10, the current collecting piece 100 includes a first current collecting piece and a second current collecting piece. The first current collecting piece and the second current collecting piece are located at two ends of the heat exchange pieces 200 respectively. The first current collecting piece is provided with a liquid inlet joint 610, and the second current collecting piece is provided with a liquid outlet joint 620. An external heat exchange medium enters a second flow channel 101 of the first current collecting piece from the liquid inlet joint 610, and then flows into the first flow channels 201 through the second flow channel 101. The heat exchange medium exchanges heat with the battery units 500 when flowing in the first flow channels 201, and then the heat exchange medium in the first flow channels 201 flows into a second flow channel 101 of the second current collecting piece to be collected, and finally flows out from the liquid outlet joint 620, thereby realizing heat exchange of the battery units 500. The heat exchange medium in the first current collecting piece is simultaneously distributed to the heat exchange pieces 200 through multiple channels. Multi-channel distribution has the advantage of increasing the heat exchange rate between the heat exchange medium and the battery units 500, such that the heating and cooling efficiency of the battery units 500 is further improved.

It is hereby noted that when the temperature of the heat exchange medium flowing in the first flow channels 201 is higher than that of the battery units 500, heat of the heat exchange medium will be transferred to the battery units 500 through the heat exchange pieces 200, serving to heat the battery units 500. When the temperature of the heat exchange medium flowing in the second flow channel 101 is lower than that of the battery units 500, heat of the battery units 500 will be transferred to the heat exchange medium through the heat exchange pieces 200. After the heat exchange medium flows out from the heat exchange pieces 200, the heat of the battery units 500 is taken away, thereby cooling the battery units 500. The heat exchange medium may be water, air, cooling liquid, or the like.

In another embodiment of the present application, with reference to FIG. 7, FIG. 10 and FIG. 11, the current collecting piece 100 of the provided heat exchange assembly 1 includes a connecting face 103 oriented toward the heat exchange pieces 200, and the plurality of second joint portions 102 are disposed on the connecting face 103.

The connecting face 103 refers to a surface of the current collecting piece 100 oriented toward the heat exchange pieces 200.

According to the heat exchange assembly 1 in this embodiment of the present application, the plurality of second joint portions 102 are disposed on the connecting face 103. In this way, during assembly, the connecting face 103 of the current collecting piece 100 is placed toward the heat exchange pieces 200, and the second joint portions 102 are disposed opposite to the heat exchange pieces 200, thereby facilitating the connection of the first joint portions 202 and the second joint portions 102, and also contributing to the improvement of the assembly efficiency. In addition, the plurality of second joint portions 102 are located on the same connecting face 103, and the structure of the current collecting piece 100 is also relatively simple, which facilitates machining and manufacturing.

In another embodiment of the present application, with reference to FIG. 7, FIG. 11 and FIG. 14, the plurality of heat exchange pieces 200 of the provided heat exchange assembly 1 are spaced apart along a first direction (referring to a direction indicated by an arrow X), and the plurality of second joint portions 102 are spaced out on the connecting face 103 along the first direction, such that the plurality of second joint portions 102 are in one-to-one correspondence with the first joint portions 202 of the plurality of heat exchange pieces 200.

The first direction refers to an arrangement direction in which the plurality of heat exchange pieces 200 and the plurality of groups of battery units 500 are alternately stacked.

The plurality of heat exchange pieces 200 are spaced apart along the first direction. Understandably, the first joint portions 202 on the plurality of heat exchange pieces 200 are also spaced apart along the first direction. In addition, an accommodation clearance 203 is formed between two adjacent heat exchange pieces 200, and the accommodation clearance 203 provides a mounting space for a group of battery units 500. The adjacent heat exchange pieces 200 exchange heat with two opposite sides of the group of battery units 500, such that double-sided heat exchange of the battery units 500 is realized.

According to the heat exchange assembly 1 in this embodiment of the present application, both the plurality of heat exchange pieces 200 and the plurality of second joint portions 102 on the current collecting piece 100 are distributed at intervals along the first direction, and the plurality of second joint portions 102 are in one-to-one correspondence with the first joint portions 202 on the plurality of heat exchange pieces 200. In this way, when the heat exchange assembly 1 is assembled with the battery units 500, the plurality of second joint portions 102 on the current collecting piece 100 are adjusted to be distributed along the first direction and opposite to the first joint portions 202, such that the first joint portions 202 can be aligned with the second joint portions 102, which makes the connecting operation of the heat exchange plate and the current collecting piece 100 simpler and quicker, and also contributes to the improvement of the assembly efficiency.

In another embodiment of the present application, with reference to FIG. 7, FIG. 10 and FIG. 11, the provided heat exchange assembly 1 further includes connectors 300. The connector 300 is disposed at junction of the first joint portion 202 and the second joint portion 102 to connect the first joint portion 202 to the second joint portion 102.

The connector 300 refer to a component for connecting the first joint portion 202 to the second joint portion 102.

According to the heat exchange assembly 1 in this embodiment of the present application, the first joint portion 202 and the second joint portion 102 are connected through the connector 300, such that the connecting operation of the first joint portion 202 and the second joint portion 102 is simple and quick, which contributes to the improvement of the assembly efficiency of the heat exchange assembly 1 and the battery units 500.

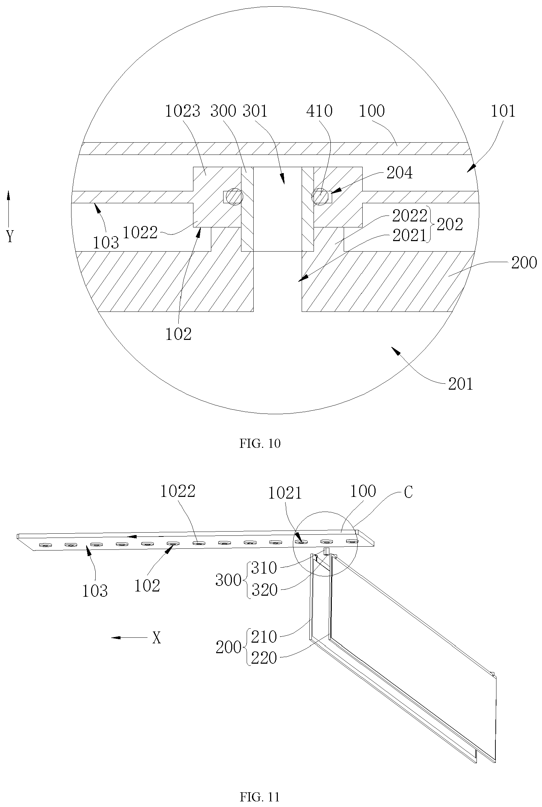

In another embodiment of the present application, with reference to FIG. 10, FIG. 12 and FIG. 14, the first joint portion 202 of the provided heat exchange assembly 1 includes a first through hole 2021. The second joint portion 102 includes a second through hole 1021. The connector 300 includes a first end and a second end that extend along a connecting direction (referring to a direction indicated by an arrow Y) of the first joint portion 202 and the second joint portion 102. The first end is connected into the first through hole 2021. The second end is connected into the second through hole 1021. The connector 300 includes a connecting hole 301 running through the first end and the second end.

The first through hole 2021 refers to a hole structure that is formed at and runs through the first joint portion 202, and communicates with the first flow channel 201.

The second through hole 1021 refers to a hole structure that is formed at and runs through the second joint portion 102, and communicates with the first flow channel 201.

The first end refers to an end of the connector 300 that is connected to the first through hole 2021.

The second end refers to an end of the connector 300 that is connected to the second through hole 1021.

The connecting hole 301 refers to a hole structure that is formed in the connector 300 and runs through the first end and the second end.

According to the heat exchange assembly 1 in this embodiment of the present application, the first end and the second end of the connector 300 are connected into the first through hole 2021 and the second through hole 1021 respectively. Connecting structures between the connector 300 and the first joint portion 202 as well as between the connector 300 and the second joint portion 102 are simple, and the connecting operation is also simpler, which contributes to the improvement of the assembly efficiency of the heat exchange assembly 1 and the battery units 500. In addition, the connector 300 includes the connecting hole 301 running through the first end and the second end. After the first end and the second end of the connector 300 are connected into the first through hole 2021 and the second through hole 1021 respectively, the connecting hole 301 enables the first flow channel 201 to communicate with the second flow channel 101, such that the current collecting piece 100 communicates with the heat exchange plate. In this way, after the first end and the second end of the connector 300 are connected into the first through hole 2021 and the second through hole 1021 respectively, the connection, fixing and communication of the current collecting piece 100 and the heat exchange plate may be simultaneously realized, thereby simplifying assembly operation, which contributes to the improvement of the assembly efficiency of the heat exchange assembly 1 and the battery units 500.

In another embodiment of the present application, with reference to FIG. 10, FIG. 11 and FIG. 12, the first ends of the provided heat exchange assembly 1 are inserted in the first through holes 2021, and the second ends are inserted in the second through holes 1021.

According to the heat exchange assembly 1 in this embodiment of the present application, the first end is inserted in the first through hole 2021, and the second end is inserted in the second through hole 1021, such that the connector 300 is connected to the current collecting piece 100 and the heat exchange piece 200 respectively. The connecting operation is simple, which contributes to the improvement of the assembly efficiency of the heat exchange assembly 1 and the battery units 500. In addition, the first end of the connector 300 is inserted in the first through hole 2021, and the second end of the connector 300 is inserted in the second through hole 1021, such that a distance between the current collecting piece 100 and the heat exchange piece 200 can be reduced, thereby reducing a space occupied by the heat exchange assembly 1 in the box and improving the energy intensity of the battery.

In this embodiment, before assembly, the connectors 300 may be pre-mounted on the heat exchange pieces 200. During assembly, the second joint portions 102 on the current collecting piece 100 are directly in one-to-one correspondence with the connectors 300 respectively. In this way, the number of parts during assembly can be reduced, fabrication procedures are reduced, and the assembly efficiency is further improved.

In another embodiment, the connector 300 may be a connecting pipe. Two ends of the connecting pipes are inserted in the first through holes 2021 and the second through holes 1021 respectively, and can communicates with the first flow channels 201 and the second flow channel 101, such that the mounting operation of the heat exchange pieces 200 and the current collecting piece 100 is simple, which contributes to the improvement of the assembly efficiency. The connecting pipes may be plastic pipes, or may be metal pipes made by metals, such as aluminum.

In another embodiment of the present application, with reference to FIG. 10, the heat exchange assembly 1 of the provided heat exchange assembly 1 further includes first seals 410. The first seal 410 is disposed between the connector 300 and a hole wall of the first through hole 2021; and/or, the first seal 410 is disposed between the connector 300 and a hole wall of the second through holes 1021.

The first seal 410 refers to a component capable of realizing a sealed connection. The first seal 410 may be a sealing ring, a sealing washer, or the like.

Understandably, the first seal 410 is disposed between the connector 300 and the hole wall of the first through hole 2021. The first seal 410 can realize a sealed connection between the connector 300 and the first through hole 2021, thereby reducing the risk of leakage of the heat exchange medium from between the connectors 300 and the holes wall of the first through hole 2021, which contributes to the improvement of the heat exchange efficiency.

Or, with reference to FIG. 7, the first seal 410 is disposed between the connector 300 and the hole wall of the second through hole 1021. The first seal 410 realize a sealed connection between the connector 300 and the second through hole 1021, thereby reducing the risk of leakage of the heat exchange medium from between the connector 300 and the hole wall of the second through hole 1021, which contributes to the improvement of the heat exchange efficiency.

Or, the first seals 410 are disposed between the connector 300 and the hole wall of the first through hole 2021 as well as between the connector 300 and the hole wall of the first through hole 2021 respectively. The sealed connections between the connector 300 and the hole wall of the first through hole 2021 as well as between the connector 300 and the hole wall of the first through hole 2021 are realized through the first seals 410 respectively, thereby reducing the risk of leakage of the heat exchange medium from between the connector 300 and the hole wall of the first through hole 2021 as well as between the connector 300 and the hole wall of the second through hole 1021, which more contributes to the improvement of the heat exchange efficiency.

In another embodiment of the present application, with reference to FIG. 11, FIG. 12 and FIG. 13, the heat exchange piece 200 of the provided heat exchange assembly 1 includes a first side plate 210 and a second side plate 220. The first side plate 210 and the second side plate 220 are connected and close in to form the first flow channel 201 and the first through hole 2021.

The first side plate 210 refers to a plate on the heat exchange piece 200 that exchanges heat with one of two adjacent groups of battery units 500.

The first side plate 210 refers to a plate on the heat exchange piece 200 that exchanges heat with the other of the two adjacent groups of battery units 500.

The heat exchange piece 200 according to this embodiment of the present application is formed by the connecting and closing in of the first side plate 210 and the second side plate 220, and is simple in structure and also convenient to machine and manufacture. In addition, in a specific manufacturing process, the first side plate 210 and the second side plate 220 may be manufactured by stamping, such that the machining and manufacturing of the heat exchange piece 200 are simpler, and the manufacturing cost is lower.

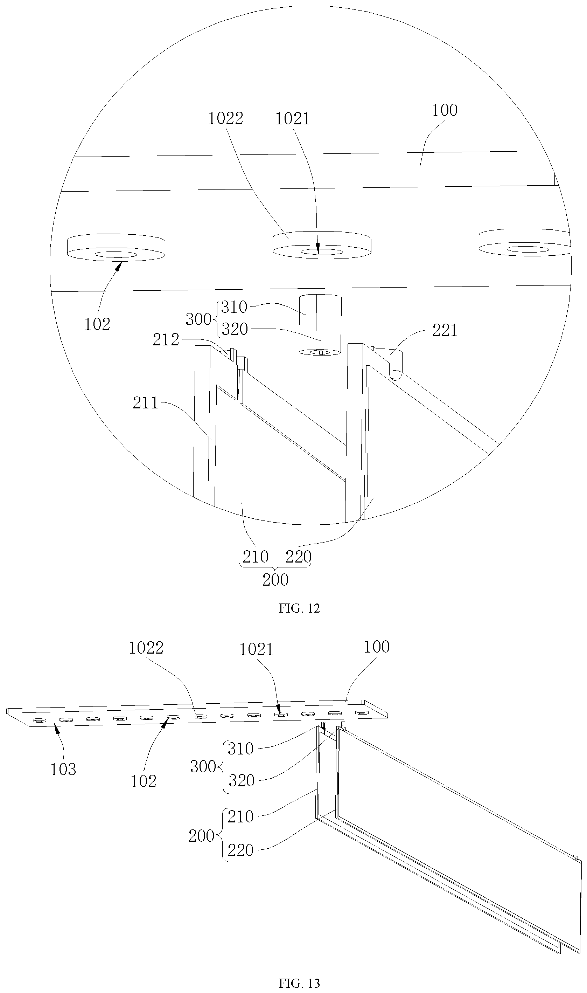

In another embodiment, with reference to FIG. 11 and FIG. 12, connecting bulges 211 are disposed at circumferences of surfaces opposite to each other of the first side plate 210 and the second side plate 220 respectively, and the two connecting bulges 211 are bonded or welded together, such that the first side plate 210 and the second side plate 220 can close in to form the first flow channel 201 therebetween. A first semi-ring bulge 212 is disposed on a side portion of the first side plate 210 oriented toward the current collecting piece 100. A second semi-ring bulge 221 is disposed on a side portion of the second side plate 220 oriented toward the current collecting piece 100. The first semi-ring bulge 212 and the second semi-ring bulge 221 close in to form the first through hole 2021.

In another embodiment of the present application, with reference to FIG. 11, FIG. 12 and FIG. 13, the connector 300 of the provided heat exchange assembly 1 includes a first connecting portion 310 and a second connecting portion 320. The first connecting portion 310 is connected to the first side plate 210. The second connecting portion 320 is connected to the second side plate 220. The first connecting portion 310 and the second connecting portion 320 close in to form the communicating hole.

The first connecting portion 310 refers to a portion on the connector 300 that is connected to the first side plate 210.

The second connecting portion 320 refers to a portion on the connector 300 that is connected to the second side plate 220.

According to the heat exchange assembly 1 in this embodiment of the present application, the connector 300 uses a separate structure of the first connecting portion 310 and the second connecting portion 320, and the first connecting portion 310 and the second connecting portion 320 may be manufactured by stamping, or the like, such that the machining and manufacturing of the connector 300 are simpler. Certainly, in other embodiments, the connector 300 may also be of an integral tubular structure, or the like.

In another embodiment of the present application, with reference to FIG. 11, FIG. 12 and FIG. 13, the first side plate 210 and the first connecting portion 310 of the provided heat exchange assembly 1 are of a one-piece structure. Or, the first connecting portion 310 is bonded to the first side plate 210. Or, the first connecting portion 310 is welded to the first side plate 210.

The first side plate 210 and the first connecting portion 310 are of the one-piece structure. Understandably, the first side plate 210 and the first connecting portion 310 may be of the one-piece structure manufactured by a one-piece process of extrusion, injection molding, die-casting, or the like, which can reduce machining process steps and reduce the manufacturing cost. In addition, the first side plate 210 and the first connecting portion 310 are of the one-piece structure, which contributes to the improvement of the structural strength of the heat exchange piece 200.

The first connecting portion 310 is bonded to the first side plate 210. Understandably, the first connecting portion 310 is bonded to the first side plate 210 through a binder. The connecting operation of the first side plate 210 and the first connecting portion 310 is simple and convenient, which contributes to reducing the manufacturing cost of the heat exchange plate. The binder may be a structural adhesive, super glue, or the like.

The first connecting portion 310 is welded to the first side plate 210. Understandably, the first connecting portion 310 is fixed to the first side plate 210 by welding. The connecting operation of the first side plate 210 and the first connecting portion 310 is simple and convenient, which contributes to reducing the manufacturing cost of the heat exchange plate.

In another embodiment of the present application, with reference to FIG. 11, FIG. 12 and FIG. 13, the second side plate 220 and the second connecting portion 320 of the provided heat exchange assembly 1 are of a one-piece structure. Or, the second connecting portion 320 is bonded to the second side plate 220. Or, the second connecting portion 320 is welded to the second side plate 220.

The second side plate 220 and the second connecting portion 320 are of the one-piece structure. Understandably, the second side plate 220 and the second connecting portion 320 may be of the one-piece structure manufactured by a one-piece process of extrusion, injection molding, die-casting, or the like, which can reduce machining process steps and reduce the manufacturing cost. In addition, the second side plate 220 and the second connecting portion 320 are of the one-piece structure, which contributes to the improvement of the structural strength of the heat exchange piece 200.

The second connecting portion 320 is bonded to the second side plate 220. Understandably, the second connecting portion 320 is bonded to the second side plate 220 through a binder. The connecting operation of the second side plate 220 and the second connecting portion 320 is simple and convenient, which contributes to reducing the manufacturing cost of the heat exchange plate. The binder may be a structural adhesive, super glue, or the like.

The second connecting portion 320 is welded to the second side plate 220. Understandably, the second connecting portion 320 is fixed to the second side plate 220 by welding. The connecting operation of the second side plate 220 and the second connecting portion 320 is simple and convenient, which contributes to reducing the manufacturing cost of the heat exchange plate.

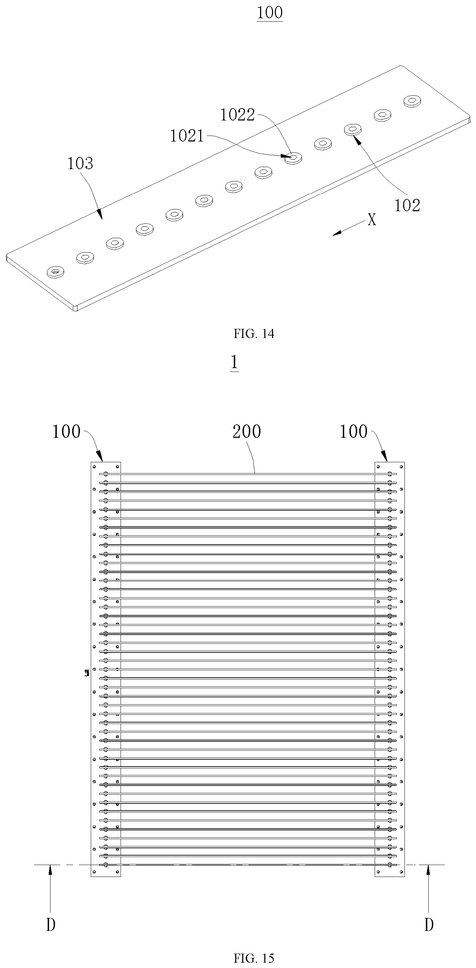

In another embodiment of the present application, with reference to FIG. 15, FIG. 16 and FIG. 17, the second end of the provided heat exchange assembly 1 is threaded in the second through hole 1021, and the first end is screwed in the first through hole 2021, such that the heat exchange piece 200 is connected to the current collecting piece 100.

The first end is screwed in the first through hole 2021. Understandably, the first end is externally provided with external threads. The hole wall of the first through hole 2021 is provided with internal threads. Through threaded fit of the external threads and the internal threads, the first end is fixed into the first through hole 2021.

According to the heat exchange assembly 1 in this embodiment of the present application, the second end of the connector 300 is threaded in the second through hole 1021, and the first end of the connector 300 is screwed in the first through hole 2021. By threaded connection, on the one hand, the connecting operation is simple, which contributes to the improvement of the assembly effect; and in addition, the manner of threaded connection has good connection reliability, ensures stable connection between the connector 300 and the heat exchange piece 200 and also contributes to the improving the mechanical strength of the heat exchange assembly 1, thereby improving the structural strength of the battery 1100. Moreover, threaded connection also has a sealing effect, which can also reduce the leakage of the heat exchange medium and improve the heat exchange effect.

In a specific embodiment, the connectors 300 may be fasteners. The connecting hole 301 is formed in the fastener. The fasteners may be screws, bolts, cap screws, or the like. The heat exchange piece 200 and the current collecting piece 100 are connected by the fasteners such as the screws, the bolts, or the cap screws. The connecting operation between the heat exchange piece 200 and the current collecting piece 100 is simpler, and the connection reliability is good.

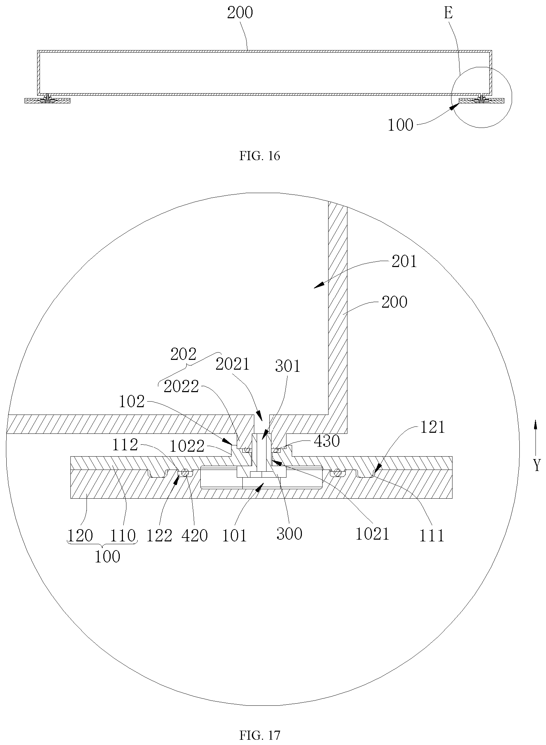

In another embodiment of the present application, with reference to FIG. 17, FIG. 18 and FIG. 19, the current collecting piece 100 of the provided heat exchange assembly 1 includes a first plate body 110 and a second plate body 120. The first plate body 110 is connected to the second plate body 120. The first plate body 110 and the second plate body 120 close in to form the second flow channel 101. The second through holes 1021 are disposed on the first plate body 110.

The first plate body 110 refers to a plate that is disposed oriented toward the heat exchange pieces 200 and provided with the second through holes 1021.

The second plate body 120 refers to a plate that is disposed oriented back from the heat exchange pieces 200.

The first plate body 110 is connected to the second plate body 120. Understandably, the first plate body 110 and the second plate body 120 may be connected through a screw structure, a buckle structure, an adhesive structure, a magnetic adsorption structure, or other structures capable of connecting and fixing the two components.

The first plate body 110 and the second plate body 120 close in to form the second flow channel 101. Understandably, a surface of the first plate body 110 oriented toward the second plate body 120 is recessed toward an inside of the first plate body 110 to form a recessed space, and an inner wall of the recessed space and a surface of the second plate body 120 oriented toward the first plate body 110 jointly close in to form the second flow channel 101. Or, a surface of the second plate body 120 oriented toward the first plate body 110 is recessed toward an inside of the second plate body 120 to form a recessed space, and an inner wall of the recessed space and the surface of the first plate body 110 oriented toward the second plate body 120 jointly close in to form the second flow channel 101. Or, the surface of the first plate body 110 oriented toward the second plate body 120 is recessed inward to form the first recessed space, the surface of the second plate body 120 oriented toward the first plate body 110 is recessed toward the inside of the second plate body 120 to form the second recessed space, and the inner wall of the first recessed space and the inner wall of the second recessed space jointly close in to form the second flow channel 101.

According to the heat exchange assembly 1 in this embodiment of the present application, when the first joint portion 202 is connected to the second joint portion 102, the first end of the connector 300 passes through the second through hole 1021 first, and then is threadedly locked in the first through hole 2021 to fix the first plate body 110 on the heat exchange piece 200, and finally the second plate body 120 is fixed on the first plate body 110, thereby realizing assembly of the heat exchange piece 200 and the current collecting piece 100. The assembly operation is simple, convenient and quick, which contributes to the improvement of the heat exchange assembly 1 and the battery units 500.

In another embodiment of the present application, with reference to FIG. 17, FIG. 20 and FIG. 21, a second seal 420 is sandwiched between the first plate body 110 and the second plate body 120 of the provided heat exchange assembly 1, and the second seal 420 surrounds the second flow channel 101. And/or, one of the first plate body 110 and the second plate body 120 is provided with an annular seal bulge 111, and the other of the first plate body 110 and the second plate body 120 is provided with an annular seal groove 121. The annular seal bulge 111 is inserted in the annular seal groove 121 and surrounds the second flow channel 101.

The second seal 420 refers to a sealing component that is sandwiched between the first plate body 110 and the second plate body 120. The second seal 420 may be a sealing ring, a sealing washer, or the like.

In an embodiment, the second seal 420 is sandwiched between the first plate body 110 and the second plate body 120, and the second seal 420 surrounds the second flow channel 101. Understandably, the second seal 420 is sandwiched between the first plate body 110 and the second plate body 120 which are provided around the second flow channel 101. In this way, when flowing outward from between the first plate body 110 and the second plate body 120, the heat exchange medium in the second flow channel 101 will be blocked by the second seal 420, thereby reducing the leakage of the heat exchange medium, and improving sealing performance of the current collecting piece 100, which contributes to the improvement of the heat exchange effect.

In an embodiment, one of the first plate body 110 and the second plate body 120 is provided with the annular seal bulge 111, and the other of the first plate body 110 and the second plate body 120 is provided with the annular seal groove 121. The annular seal bulge 111 is inserted in the annular seal groove 121, and the annular seal bulge 111 surrounds the second flow channel 101. Understandably, the annular seal bulge 111 is disposed on the first plate body 110, and the annular seal groove 121 is disposed on the second plate body 120. Or, the annular seal bulge 111 is disposed on the second plate body 120, and the annular seal groove 121 is disposed on the first plate body 110. For the first plate body 110 and the second plate body 120, after the annular seal bulge 111 is inserted in the annular seal groove 121, the heat exchange medium in the second flow channel 101 flows to the annular seal bulge 111 from a clearance between the first plate body 110 and the second plate body 120 and then is blocked by the annular seal bulge 111, thereby reducing the risk of leakage of the heat exchange medium from between the first plate body 110 and the second plate body 120, and improving the sealing performance of the current collecting piece 100, which contributes to the heat exchange effect.

In an embodiment, the annular seal groove 121 may be filled with a sealant. A clearance between the annular seal groove 121 and the annular seal bulge 111 may be completely filled with the sealant. A better sealing effect can be realized, the risk of leakage of the heat exchange medium in the second flow channel 101 is lower, and the sealing performance of the current collecting piece 100 is better.

In an embodiment, the second seal 420 is sandwiched between the first plate body 110 and the second plate body 120 of the heat exchange assembly 1, and the second seal 420 surrounds the second flow channel 101. One of the first plate body 110 and the second plate body 120 is provided with the annular seal bulge 111, and the other of the first plate body 110 and the second plate body 120 is provided with the annular seal groove 121. The annular seal bulge 111 is inserted in the annular seal groove 121, and the annular seal bulge 111 surrounds the second flow channel 101. Understandably, the second seal 420 as well as the annular seal bulge 111 and the annular seal groove 121 are used together between the first plate body 110 and the second plate body 120 for sealing of the second flow channel 101. In this way, the sealing performance of the second flow channel 101 is better, the risk of leakage of the heat exchange medium is lower, and the sealing performance of the current collecting piece 100 is better. the second seal 420 may be located between the annular seal bulge 111 and the second flow channel 101, or the annular seal bulge 111 is located between the second flow channel 101 and the second seal 420, which is specifically selected according to actual needs, and is not limited herein.

In another embodiment of the present application, with reference to FIG. 10, FIG. 17, FIG. 20 and FIG. 21, the second joint portion 102 of the provided heat exchange assembly 1 further includes a first bulge 1022. The first bulge 1022 is disposed protruding from the connecting face 103. The second through hole 1021 runs through the first bulge 1022 along the connecting direction of the first joint portion 202 and the second joint portion 102.

The first bulge 1022 refers to a portion on the current collecting plate that protrudes from the connecting face 103.

According to the heat exchange assembly 1 in this embodiment of the present application, the disposing of the first bulge 1022 can increase the thickness of the second through hole 1021, improve the structural strength of the second through hole 1021, and improve the connection reliability of the current collecting piece 100 and the connector 300. In addition, the disposing of second bulge 2022 can also increase the depth of the second through hole 1021, thereby increasing the connection area 103 of the connector 300 and the second through hole 1021, improving the connection reliability of the current collecting piece 100 and the connector 300, and in turn, improving the structural strength of the entire heat exchange assembly 1.

In another embodiment of the present application, with reference to FIG. 10 and FIG. 17, the first joint portion 202 of the provided heat exchange assembly 1 further includes a second bulge 2022. The second bulge 2022 is disposed on an outer surface of the heat exchange piece 200 oriented toward the current collecting piece 100. The first through hole 2021 runs through the second bulge 2022 along the connecting direction of the first joint portion 202 and the second joint portion 102. The first bulge 1022 abuts against the second bulge 2022.

The second bulge 2022 refers to a portion on the heat exchange plate that protrudes from the outer surface of the heat exchange piece 200 oriented toward the current collecting piece 100.

According to the heat exchange assembly 1 in this embodiment of the present application, the disposing of the second bulge 2022 can increase the thickness of the first through hole 2021, improve the structural strength of the first through hole 2021, improve the connection reliability of the heat exchange piece 200 and the connector 300, and in turn, improve the structural strength of the entire heat exchange assembly 1. In addition, the first bulge 1022 abuts against the second bulge 2022, which can limit a distance between the current collecting piece 100 and the heat exchange piece 200. Then, the current collecting piece 100 has the same or nearly the same distance from each heat exchange piece 200. The current collecting piece 100 has a flat and straight overall shape. Therefore, accurate mounting between the current collecting piece 100 and each heat exchange piece 200 can be realized.

In another embodiment of the present application, with reference to FIG. 17, a third seal 430 is sandwiched between the first bulge 1022 and the second bulge 2022 of the provided heat exchange assembly 1. The connector 300 is threaded in the third seal 430.

The third seal 430 refers to a sealing component that is sandwiched between the first bulge 1022 and the second bulge 2022. The third seal 430 may be a sealing ring, a sealing washer, or the like.

According to the heat exchange assembly 1 in this embodiment of the present application, the third seal 430 is sandwiched between the first bulge 1022 and the second bulge 2022. The connector 300 is inserted in the third seal 430. In this way, when flowing to between the first bulge 1022 and the second bulge 2022, the heat exchange medium flowing from between the connector 300 and the hole wall of the first through hole 2021 will be blocked by the third seal 430 and cannot continue flowing outward, which reduces the risk of leakage of the heat exchange medium in the first flow channel 201. Similarly, the heat exchange medium flowing from between the connector 300 and the hole wall of the second through hole 1021 will also be blocked by the third seal 430 and cannot continue flowing outward, which reduces the risk of leakage of the heat exchange medium in the second flow channel 101. The leakage of the heat exchange medium in the heat exchange assembly 1 is reduced, which contributes to the improvement of the heat exchange efficiency.

In another embodiment of the present application, with reference to FIG. 10, the second joint portion 102 of the provided heat exchange assembly 1 further includes a third bulge 1023. The third bulge 1023 is disposed on an inner wall of the second flow channel 101 close to the heat exchange piece 200. The second through hole 1021 runs through the third bulge 1023 along the connecting direction of the first joint portion 202 and the second joint portion 102.

The third bulge 1023 refer to a portion on the current collecting piece 100 that protrudes from the inner wall of the second flow channel 101 close to the heat exchange piece 200.

According to the heat exchange assembly 1 in this embodiment of the present application, the disposing of the third bulge 1023 can increase the thickness of the second through hole 1021, improve the structural strength of the second through hole 1021, and improve the connection reliability of the current collecting piece 100 and the connector 300. In addition, the disposing of third bulge 1023 can also increase the depth of the second through hole 1021, thereby increasing the connection area 103 of the connector 300 and the second through hole 1021, improving the connection reliability of the current collecting piece 100 and the connector 300, and in turn, improving the structural strength of the entire heat exchange assembly 1.

In another embodiment, with reference to FIG. 8, FIG. 9 and FIG. 10, the second bulge 2022 is disposed on the heat exchange piece 200. The first bulge 1022 and the third bulge 1023 are disposed on the current collecting piece 100. The first end of the connector 300 is inserted in the first through hole 2021. The second end of the connector 300 is inserted in the second through hole 1021. The second bulge 2022 can improve the structural strength of the first through hole 2021, and improve the connection reliability of the heat exchange piece 200 and the first end. In addition, the first bulge 1022 and the third bulge 1023 can improve the structural strength of the second through hole 1021, can increase the depth of the second through hole 1021, and can increase the depth of the second end inserted in the second through hole 1021, thereby improving the connection strength of the second end and the current collecting piece 100 as well as the connection reliability between the current collecting piece 100 and the heat exchange piece 200. A seal accommodation groove 204 extending along a circumferential direction is formed in the hole wall of the first through hole 2021. The first seal 410 is received in the seal accommodation groove 204. The connector 300 is inserted in the first through hole 2021 and extrudes the second seal 420 to deform it, such that the second seal 420 seals a clearance between the connector 300 and the hole wall of the second through hole 1021, thereby realizing a sealed connection of the connector 300 and the current collecting piece 100.

With reference to FIG. 11 and FIG. 12, the heat exchange plate includes a first side plate 210 and a second side plate 220. Connecting bulges 211 are disposed at circumferences of surfaces opposite to each other of the first side plate 210 and the second side plate 220 respectively, and the two connecting bulges 211 are bonded or welded together, such that the first side plate 210 and the second side plate 220 can close in to form the first flow channel 201 therebetween. A first semi-ring bulge 212 is disposed on a side portion of the first side plate 210 oriented toward the current collecting piece 100. A second semi-ring bulge 221 is disposed on a side portion of the second side plate 220 oriented toward the current collecting piece 100. The first semi-ring bulge 212 and the second semi-ring bulge 221 close in to form the first through hole 2021. The first connecting portion 310 is bonded or welded to the first semi-ring bulge 212. The second connecting portion 320 is bonded or welded to the second semi-ring bulge 221. After the first side plate 210 and the second side plate 220 are connected together, the first connecting portion 310 and the second connecting portion 320 are also connected and close in to form the connecting hole 301. The first semi-ring bulge 212 and the second semi-ring bulge 221 jointly form the second bulge 2022.

In another embodiment, with reference to FIG. 13, the first connecting portion 310 and the first side plate 210 are integrally molded by stamping. The second connecting portion 320 and the second side plate 220 are integrally molded by stamping. In this way, the heat exchange pieces 200 have a simple manufacturing manner, which contributes to the reduction of the manufacturing cost.

In another embodiment, with reference to FIG. 17, FIG. 20 and FIG. 21, the connectors 300 are first cap screws. The connecting hole 301 is formed in the first cap screw along an axial direction. The second through holes 1021 are formed in the first plate body 110. The first through holes 2021 are formed in the heat exchange piece 200. The first cap screw pass through the second through hole 1021 and then crewed in the first through hole 2021. Then, the second plate body 120 is fixed to the first plate body 110 through second screws 440. The heat exchange pieces 200 and the current collecting piece 100 are fixed by cap screws. The connecting operation is simple and quick, and stable and reliable connection of the heat exchange pieces 200 and the current collecting piece 100 can also be realized. The second screws 440 are plural in number and spaced apart along a circumference of the first plate body 110, such that stable and reliable connection of the first plate body 110 and the second plate body 120 can be realized.

The second bulge 2022 is disposed on the heat exchange piece 200. The first bulges 1022 are disposed on the first plate body 110. Stepped groove is formed in surface of the first bulge 1022 oriented toward the second bulge 2022. The second seal 420 is located in the stepped groove. In addition, the second bulge 2022 is inserted in the stepped groove and presses against the second seal 420, such that the second seal 420 deforms, and clearance between the first bulge 1022 and the second bulge 2022 is sealed through the deformation of the second seal 420, thereby reducing the leakage of the heat exchange medium and improving the sealing performance.

The first plate body 110 is provided with an annular abutting bulge 112. The second plate body 120 is provided with an annular accommodation groove 122. The second seal 420 is located in the annular accommodation groove 122. The annular abutting bulge 112 is inserted in the annular accommodation groove 122 and presses against the second seal 420, such that the second seal 420 deforms to seal a clearance between the annular abutting bulge 112 and the annular accommodation groove 122, thereby sealing the second flow channel 101.

The first plate body 110 is provided with an annular seal bulge 111. The second plate body 120 is provided with an annular seal groove 121. The annular seal bulge 111 surrounds the annular abutting bulge 112. The annular seal bulge 111 is inserted in the annular seal groove 121, thereby improving the sealing performance of the second flow channel 101 and reducing the leakage of the heat exchange medium.

In another embodiment of the present application, a battery is provided, including the foregoing heat exchange assembly 1.

The battery according to this embodiment of the present application uses the foregoing heat exchange assembly 1. The assembly operation of the heat exchange assembly 1 and battery units 500 is simple, and the assembly efficiency is high, which contributes to the improvement of the production efficiency of the battery and the reduction of the manufacturing cost of the battery.

The battery according to this embodiment of the present application employs all the technical solutions of all the preceding embodiments, and therefore, achieves all the beneficial effects brought by the technical solutions of the preceding embodiments, the details of which are omitted here.

In another embodiment of the present application, an electrical device is provided, including the foregoing battery.

The electrical device according to this embodiment of the present application uses the foregoing battery. The manufacturing cost of the battery is low, which contributes to the reduction of the manufacturing cost of the electrical device.

The electrical device according to this embodiment of the present application employs all the technical solutions of all the preceding embodiments, and therefore, achieves all the beneficial effects brought by the technical solutions of the preceding embodiments, the details of which are omitted here.

The above are only preferred embodiments of the present application and are not intended to limit the present application. Any modifications, equivalent replacements, improvements, and the like made within the spirit and principles of the present application shall fall within the protection scope of the present application.

## Claims

1. A heat exchange assembly, comprising:
a plurality of heat exchange pieces, the heat exchange piece being constructed with a first flow channel and a first joint portion, and the first joint portion communicating with the first flow channel; and
a current collecting piece, the current collecting piece being constructed with a second flow channel and a plurality of second joint portions, and the plurality of second joint portions each communicating with the second flow channel and being configured to be connected to the first joint portions of the plurality of heat exchange pieces respectively, such that the second flow channel of the current collecting piece communicates with the first flow channels of the plurality of heat exchange pieces.

2. The heat exchange assembly according to claim 1, wherein the current collecting piece comprises a connecting face oriented toward the heat exchange pieces, and the plurality of second joint portions are disposed on the connecting face.

3. The heat exchange assembly according to claim 2, wherein the plurality of heat exchange pieces are spaced apart along a first direction, and the plurality of second joint portions are spaced out on the connecting face along the first direction, such that the plurality of second joint portions are in one-to-one correspondence with the first joint portions of the plurality of heat exchange pieces.

4. The heat exchange assembly according to claim 2 or 3, wherein the heat exchange assembly further comprises connectors, and each connector is disposed at junction of the first joint portion and the second joint portion to connect the first joint portion to the second joint portion.

5. The heat exchange assembly according to claim 4, wherein the first joint portion comprises a first through hole, the second joint portion comprises a second through hole, the connector comprises a first end and a second end that extend along a connecting direction of the first joint portion and the second joint portion, the first end is connected into the first through hole, the second end is connected into the second through hole, and the connector comprises a connecting hole running through the first end and the second end.

6. The heat exchange assembly according to claim 5, wherein the first end is inserted in the first through hole, and the second end is inserted in the second through hole.

7. The heat exchange assembly according to claim 6, wherein the heat exchange assembly further comprises first seals, and the first seal is disposed between the connector and hole wall of the first through hole; and/or,
the first seal is disposed between the connector and hole wall of the second through hole.

8. The heat exchange assembly according to claim 6 or 7, wherein the heat exchange piece comprises a first side plate and a second side plate, and the first side plate and the second side plate are connected and close in to form the first flow channel and the first through hole.

9. The heat exchange assembly according to claim 8, wherein the connector comprises a first connecting portion and a second connecting portion, the first connecting portion is connected to the first side plate, the second connecting portion is connected to the second side plate, and the first connecting portion and the second connecting portion close in to form the connecting hole.

10. The heat exchange assembly according to claim 9, wherein the first side plate and the first connecting portion are of a one-piece structure;
or the first connecting portion is bonded to the first side plate;
or the first connecting portion is welded to the first side plate.

11. The heat exchange assembly according to claim 9 or 10, wherein the second side plate and the second connecting portion are of a one-piece structure;
or the second connecting portion is bonded to the second side plate;
or the second connecting portion is welded to the second side plate.

12. The heat exchange assembly according to any one of claims 5 to 11, wherein the second end is threaded in the second through hole, and the first end is screwed in the first through hole, such that the heat exchange piece is connected to the current collecting piece.

13. The heat exchange assembly according to claim 12, wherein the current collecting piece comprises a first plate body and a second plate body, and the first plate body and the second plate body are connected and close in to form the second flow channel; and
the second through holes are disposed on the first plate body.

14. The heat exchange assembly according to claim 13, wherein a second seal is sandwiched between the first plate body and the second plate body, and the second seal surrounds the second flow channel;
and/or, one of the first plate body and the second plate body is provided with an annular seal bulge, and the other of the first plate body and the second plate body is provided with an annular seal groove; and the annular seal bulge is inserted in the annular seal groove and surrounds the second flow channel.

15. The heat exchange assembly according to any one of claims 5 to 14, wherein the second joint portion further comprises a first bulge, the first bulge protrudes from the connecting face, and the second through hole runs through the first bulge along the connecting direction of the first joint portion and the second joint portion.

16. The heat exchange assembly according to claim 15, wherein the first joint portion further comprises a second bulge, the second bulge is disposed on an outer surface of the heat exchange piece oriented toward the current collecting piece, the first through hole runs through the second bulge along the connecting direction of the first joint portion and the second joint portion, and the first bulge abuts against the second bulge.

17. The heat exchange assembly according to claim 16, wherein a third seal is sandwiched between the first bulge and the second bulge, and the connector is threaded in the third seal.

18. The heat exchange assembly according to any one of claims 5 to 14, wherein the second joint portion further comprises a third bulge, the third bulge is disposed on an inner wall of the second flow channel close to the heat exchange piece, and the second through hole runs through the third bulge along the connecting direction of the first joint portion and the second joint portion.

19. A battery, comprising the heat exchange assembly according to any one of claims 1 to 18.

20. An electrical device, comprising the battery according to claim 19.
